# FASCICULE DE BREVET EUROPEEN

(11) **EP 0 621 570 B1**
(45) Date de publication et mention de la délivrance du brevet: **07.01.1998**
(21) Numéro de dépôt: 94400814.3
(22) Date de dépôt: 14.04.1994
(51) Int. Cl.: G07F 7/12

(54) **Procédé de mise à jour d'une carte à mémoire**
Verfahren zum Aktualisieren einer Speicherkarte
IC-card updating method

(30) Priorité: 16.04.1993 FR 9304515
(43) Date de publication de la demande: 26.10.1994
(73) Titulaire: FRANCE TELECOM, 75015 Paris (FR); LA POSTE, F-92777 Boulogne Billancourt Cédex (FR)
(72) Inventeur: Pailles, Jean-Claude, F-14610 Epron (FR); Depret, Eric, F-14000 Caen (FR); Hiolle, Philippe, F-14200 Herouville Saint Clair (FR)
(74) Mandataire: Signore, Robert

(56) Documents cités:
- EP-A- 0 096 599
- EP-A- 0 152 703
- EP-A- 0 423 035
- FR-A- 2 246 913

## Description

### Domaine technique

La présente invention a pour objet un procédé de mise à jour d'une carte à mémoire. Elle trouve une application dans ce qu'on appelle la monnaie électronique et plus particulièrement dans les systèmes à prépaiement dits ouverts. On désigne par là des systèmes impliquant un organisme émetteur de monnaie électronique, des utilisateurs possédant des cartes préchargées par l'émetteur, et des terminaux aptes à fournir certaines prestations, à débiter les cartes en conséquence et à collecter les montants provenant de plusieurs cartes. L'organisme propriétaire de ces terminaux est rétribué par l'émetteur selon la quantité d'unités qu'il a collectées. Le caractère "ouvert" de certains de ces systèmes vient de ce que l'organisme émetteur n'est pas nécessairement confondu avec les prestataires possédant les terminaux.

Si l'invention s'applique de manière privilégiée à de tels systèmes, parce qu'elle permet de résoudre certains problèmes liés au caractère "ouvert", elle n'est pas limitée pour autant à ces seuls systèmes et pourrait aussi bien s'appliquer à des systèmes fermés, où l'organisme émetteur serait le propriétaire des terminaux.

### Etat de la technique antérieure

Comme tous les systèmes à cartes portatives, les systèmes à prépaiement posent des problèmes de sécurité. Le problème est d'autant plus ardu pour les systèmes ouverts que les terminaux doivent prouver à l'organisme émetteur l'authenticité des montants qu'ils ont collectés. A cette fin, chaque terminal doit être équipé d'un module de sécurité.

Ces problèmes de sécurité peuvent être mieux perçus en passant en revue quelques risques de fraudes qu'il faut éviter :

### risque a) : altération des données échangées :

il ne doit pas être possible, par interposition de dispositifs informatiques entre une carte et un module de sécurité, de modifier les données transmises pour, par exemple, créditer un module de sécurité de plus d'unités qu'il n'en a été débité dans la carte ;

### risque b) : réutilisation des données échangées :

il ne doit pas être possible de répéter les échanges de données, par exemple pour créditer plusieurs fois un même module de sécurité à partir d'un seul débit d'une carte ;

### risque c) : interposition d'un autre module de sécurité :

il ne doit pas être possible d'interposer un second module de sécurité et de créditer les deux modules de sécurité à partir d'un seul débit d'une carte ;

### risque d) : altération du contenu d'une carte :

il ne doit pas être possible d'altérer le contenu d'une carte de façon à en augmenter illicitement le pouvoir d'achat.

Tous ces problèmes peuvent être résolus par l'introduction, dans la carte, d'un microprocesseur apte à effectuer diverses opérations de vérification, embrouillage des données, authentification, signature, etc...

Cette solution donne satisfaction à certains égards. Elle présente néanmoins l'inconvénient d'être coûteuse car elle nécessite l'introduction d'un microprocesseur dans chaque carte.

On connaît par le document EP-A-0 423 035, un système de paiement ou de transfert d'informations par carte à mémoire électronique porte-monnaie, qui évite l'emploi d'un microprocesseur. Ce système comprend diverses zones mémoire, dont une zone contenant l'identité du titulaire, une zone contenant un certificat, une zone contenant un compteur, une zone contenant un solde et une zone contenant un code secret.

Le compteur compte le nombre d'opérations financières effectuées avec la carte. Le certificat est fonction de l'identité du titulaire, du contenu du compteur et du solde.

Ce système ne résout pas parfaitement les problèmes de sécurité, en ce sens qu'il n'évite pas que de la fausse monnaie puisse être créée. En effet, les zones mémoire contenant le certificat et le solde sont effaçables et inscriptibles sans aucune contrainte. Rien n'empêche donc de débiter une carte porte-monnaie de 10 unités par exemple et de créditer deux terminaux de 10 unités. On aura ainsi créé 10 unités de fausse monnaie.

La présente invention a justement pour but de remédier à cet inconvénient.

### Exposé de l'invention

La présente invention reprend certaines des opérations divulguées par le document cité (incrémentation d'un compteur, formation d'un certificat), mais elle ajoute à celles-ci des opérations qui évitent tout risque de création de fausse monnaie. Pour cela, le calcul du certificat tient compte de l'identité du module de sécurité, de sorte que deux certificats calculés par deux terminaux différents pour une même carte porte-monnaie et pour la même transaction seront nécessairement différents. Par ailleurs, pour effacer le certificat et le réécrire, il faudra nécessairement incrémenter le compteur. Enfin, les terminaux authentifient la carte porte-monnaie et son contenu avant et après la transaction.

De façon précise, la présente invention a donc pour objet un procédé de mise à jour d'une information selon la revendication 1.

Les cartes peuvent être authentifiées grâce à un processus challenge-réponse qui est classique en sécurité informatique : le terminal envoie à la carte un challenge x, qui est choisi en général aléatoirement ou différent des valeurs déjà utilisées. La carte calcule une fonction Y=f(x,m) où m représente le contenu de sa mémoire. Le terminal peut alors acquérir la certitude que la carte est authentique, ainsi que son contenu, en faisant de son côté le même calcul pour vérifier Y. Pour que ce processus ne soit pas imitable, il faut qu'il y ait un secret quelque part : par exemple, la mémoire doit contenir une clé, non lisible de l'extérieur, mais que le terminal ou l'ordinateur qui lui est raccordé connaît ou sait reconstituer.Ainsi, le terminal peut authentifier la carte et son contenu.

De préférence, le solde (b) contenu dans la zone (B) est un solde financier, le procédé étant alors un procédé de paiement correspondant à une prestation.

Pour prévenir toute possibilité de retour en arrière (changer b',d' en b,d, ce qui aurait pour effet d'effacer la dernière consommation), un mécanisme de "cliquet" est mis en oeuvre grâce à la zone mémoire C. La carte comprend des moyens tels que le contenu de la zone C doit être incrémenté avant la mise à jour des zones B, D et J, (ce qui nécessite un effacement préalable de ces zones). La zone C est une zone qui, au départ, peut être à zéro, et dans laquelle des bits peuvent être simplement écrits, mais non effacés.

Le calcul du certificat d prend en compte la valeur c de ce compteur. Ainsi, modifier (b',d') en (b,d) n'est pas possible sans que soit incrémenté c. Mais alors le certificat d n'est plus correct, puisque calculé avec le c précédent.

Le calcul du certificat d doit aussi prendre en compte le numéro j du module de sécurité, de façon à lier, lors d'une transaction, une carte à un module de sécurité particulier et éviter la fraude de type c, telle que décrite plus haut.

Lorsque le procédé de l'invention est un procédé de paiement, il comporte, de préférence, les opérations suivantes :
a) vérifier qu'un certificat (d) contenu dans une zone (D) de la partie (Tr) de la carte est bien une fonction déterminée (g) de l'identité de la carte (i), de son solde (b), du contenu (c) d'une zone mémoire (C) jouant le rôle de compteur, et de l'identité (j) du dernier module de sécurité ayant effectué la dernière transaction,
b) calculer, dans le module de sécurité (MS), un nouveau solde (b') qui diffère de l'ancien (b) d'un certain nombre d'unités (n), correspondant à une prestation,
c) calculer, dans le module de sécurité (MS), un contenu de compteur (c') égal à l'ancien contenu (c) augmenté d'une unité (c'=c+1),
d) calculer un nouveau certificat (d') égal à ladite fonction (g) de l'identité de la carte (i), du nouveau solde (b'), du nouveau contenu (c') du compteur et de l'identité (j') du module de sécurité (MS),
e) incrémenter d'une unité le contenu (c) de la zone mémoire (C) de la carte jouant le rôle de compteur (c'=c+1),
f) si et seulement si ce contenu (c') a été effectivement incrémenté, il est possible d'effacer de la partie (Tr) son ancien contenu (tr) constitué par l'ancien solde (b), l'ancien certificat (d) et l'ancienne identité (j) du dernier module de sécurité utilisé et y inscrire à la place un nouveau contenu (tr') constitué par le nouveau solde (b'), le nouveau certificat (d') et l'identité (j') du module de sécurité du terminal,
g) authentifier par le module de sécurité (MS) la carte (CM) et au moins l'identité (j') du nouveau contenu (tr') de la zone (Tr),
h) en cas d'authenticité, modifier le solde (s) du module de sécurité de la quantité (n) correspondant à la modification du solde de la carte (s'=s+n).

Ce procédé permet bien d'éviter les risques définis plus haut, à savoir, respectivement :
- risque a): le module de sécurité authentifie la carte au début de la transaction et après mise à jour des données écrites dans la carte ; il n'est donc pas possible de modifier les données transmises ;
- risque b): le module de sécurité authentifie la carte avant et après la transaction et choisit les challenges ; on ne peut donc lui soumettre à nouveau les données d'un premier échange telles quelles ;
- risque c): si la transaction devait s'effectuer entre deux modules de sécurité différents, donc d'identités différentes respectivement, jl et j2, il faudrait, pour une même valeur c de la zone compteur C, inscrire deux séries de données différentes, l'une T1 relative à jl et l'autre, T2, relative à j2 ; mais pour effacer T1 afin d'écrire T2, il faudrait nécessairement incrémenter le contenu de la zone compteur C, ce qui rendrait invalide T2 ; on ne peut donc créditer deux modules de sécurité à partir d'un même débit affectant une seule carte.
- risque d): on ne peut modifier le solde b car le certificat d dépendant de façon secrète du solde b, il est impossible de trouver la valeur correspondante de d, et une valeur fausse serait détectée lors de la transaction suivante ; pour remettre la carte dans un état antérieur, il faudrait donc effacer son contenu c, ce qui impliquerait d'incrémenter le contenu du compteur C ; les anciennes valeurs du certificat d serait alors incorrectes, le module de sécurité impliqué dans la transaction le détecterait et la carte ne serait donc plus utilisable.

### Exposé détaillé d'un mode de réalisation

On va décrire, ci-après, une procédure détaillée d'échange d'ordres et de données entre une carte à mémoire, un terminal et son module de sécurité. Les lettres majuscules désignent des zones mémoire ou des dispositifs alors que les minuscules correspondantes désignent le contenu de ces zones. La carte à mémoire est notée CM, son identité est i. Le terminal est noté T. Le module de sécurité en service est noté MS et son identité est notée j', sachant que celle du module ayant effectué la transaction précédente était j.

Les opérations mises en oeuvre sont alors les suivantes :
1. T demande à MS de choisir un aléa ;
2. MS choisit et mémorise un aléa, soit x ;
3. MS transmet x à T ;
4. T demande à CM de lire le contenu m de la mémoire M ;
5. CM lit M et transmet m à T ;
6. T demande à CM de s'authentifier à l'aide de l'aléa x ;
7. CM calcule Y=f(m,x) ;
8 CM transmet Y a T ;
9. T transmet Y et m à MS ;
10. MS calcule f(x,m) et vérifie que Y est bien égal à f(x,m)
11. T demande à MS de vérifier le certificat d ;
12. MS calcule D=g(i,b,c,j) ;
13. T communique à MS le débit à effectuer n ;
14. MS calcule la nouvelle valeur du solde d'=d-n, incrémente c par c'=c+1 et calcule d'=g(i,b',c',j') ;
15. MS transmet à T les mises à jour d', j', b' ;
16. T demande à CM d'écrire un 1 dans la zone C, d'effacer le contenu tr de la zone de travail Tr, d'y écrire le nouveau contenu tr' formé par j', b', d' ;
17. T demande à MS de choisir un nouvel aléa ;
18. MS choisit et mémorise un aléa x' ;
19. MS adresse x' à T ;
20. T demande à CM de s'authentifier avec son nouveau contenu m' ;
21. CM calcule Y'=f(x',m') ;
22. CM transmet à T la valeur de Y' ;
23. T demande à MS de vérifier l'authenticité de Y' ;
24. MS vérifie que m' correspond bien à i, c', j', b', d' et vérifie que Y'=f(x',m') ;
25. si la vérification est positive, MS augmente son solde de n.

Les opérations qui précèdent aboutissent à la diminution du solde de la carte et à l'augmentation du montant collecté par le terminal. Il va de soi qu'on peut appliquer la même suite d'opérations pour recharger une carte et augmenter son solde, et diminuer d'autant un terminal de rechargement.

Dans les exemples qui précèdent, (m) représente le contenu des données dans la carte (CM). Mais il est possible de ne pas incorporer dans (m) les données du certificat (d) et celles du solde (b). En effet, ces données sont authentifiables indirectement par le fait que Y est une fonction notamment de (j). Ceci peut simplifier la réalisation.

## Revendications

1. Procédé de mise à jour d'une information (tr) contenue dans une partie (Tr) d'une mémoire (M) contenue dans une carte à mémoire (CM), à l'aide d'un terminal (T) équipé d'un module de sécurité (MS), la mémoire (M) contenant une zone compteur (C), le contenu de cette partie (Tr) de la mémoire (M) à mettre à jour comprenant un certificat (d) contenu dans une zone (D) de cette partie (Tr), ce certificat étant une fonction déterminée (g) de l'identité (i) de la carte, d'un solde (b) contenu dans une autre zone (B), du contenu (c) de la zone compteur (C) et de l'identité (j) du module de sécurité (MS) ayant effectué la dernière mise à jour, ce procédé consistant à :
- incrémenter d'une unité le contenu (c) de la zone compteur (C) avant toute mise à jour de la partie (Tr),
- si et seulement si le contenu (c) de la zone compteur (C) a été incrémenté, effacer le certificat contenu dans la zone (D) de la partie de la mémoire à mettre à jour et réécrire le certificat mis à jour,
- authentifier la carte (CM) et son contenu (m) par le terminal (T) avant et après mise à jour.

2. Procédé selon la revendication 1, caractérisé par le fait que le solde (b) contenu dans la zone (B) est un solde financier, le procédé étant alors un procédé de paiement correspondant à une prestation.

3. Procédé selon la revendication 2, caractérisé par le fait qu'il consiste à :
a) vérifier que le certificat (d) contenu dans la zone (D) de la partie (Tr) de la mémoire est bien une fonction déterminée (g) de l'identité de la carte (i), de son solde (b), du contenu (c) de la zone mémoire (C) jouant le rôle de compteur, et de l'identité (j) du dernier module de sécurité ayant effectué la dernière transaction,
b) calculer, dans le module de sécurité (MS), un nouveau solde (b') qui diffère de l'ancien (b) d'un certain nombre d'unités (n) correspondant à une prestation,
c) calculer, dans le module de sécurité (MS), un contenu de compteur (c') égal à l'ancien contenu (c) augmenté d'une unité (c'=c+1),
d) calculer un nouveau certificat (d') égal à ladite fonction (g) de l'identité de la carte (i), du nouveau solde (b'), du nouveau contenu (c') du compteur et de l'identité (j') du module de sécurité (MS),
e) incrémenter d'une unité le contenu (c) de la zone mémoire (C) de la carte jouant le rôle de compteur (c'=c+1),
f) si et seulement si ce contenu (c') a été effectivement incrémenté, effacer de la partie (Tr) de la mémoire son ancien contenu (tr) constitué par l'ancien solde (b), l'ancien certificat (d) et l'ancienne identité (j) du dernier module de sécurité utilisé et y inscrire à la place un nouveau contenu (tr') constitué par le nouveau solde (b'), le nouveau certificat (d') et l'identité (j') du module de sécurité du terminal,
g) authentifier par le module de sécurité (MS) la carte (CM) et au moins l'identité (j') du nouveau contenu (tr') de la partie (Tr),
h) en cas d'authenticité, modifier le solde (s) du module de sécurité de la quantité (n) correspondant à la modification du solde de la carte (s'=s+n).

4. Procédé selon la revendication 3, caractérisé par le fait que, pour authentifier une carte (CM) lors de son introduction dans un terminal (T) :
- le module de sécurité (MS) choisit et mémorise un aléa (x) et l'adresse au terminal (T),
- le terminal (T) adresse cet aléa (x) à la carte (CM),
- la carte (CM) lit le contenu de sa mémoire (m) et l'adresse au terminal (T),
- le module de sécurité (MS) calcule une fonction Y=f(x, m) de l'aléa (x) et du contenu (m) de la mémoire (M),
- la carte calcule une fonction Y=f(m,x) de son contenu (m) et de l'aléa (x) reçu et adresse cette fonction (Y) au terminal,
- le module de sécurité (MS) teste que le résultat de la fonction (Y) reçue de la carte est bien identique au résultat de la fonction qu'il a calculée.

## Claims

1. Process for updating an information (tr) contained in a part (Tr) of a memory (M) contained in a smart card (CM), with the aid of a terminal (T) equipped with a security module (MS), the memory (M) containing a counter area (C), the content of the part (Tr) of the memory (M) to be updated having a certificate (d) contained in an area (D) of said part (Tr), said certificate being a given function (g) of the identity (i) of the card, a balance (b) contained in another area (B) and the content (c) of the counter area (C) and the identity (j) of the security module (MS) which has performed the last updating, said process comprising incrementing by one unit the content (c) of the counter zone (C) prior to any updating of the part (Tr) if and only if the content (c) of the counter zone (C) has been incremented, erasing the certificate contained in the zone (D) of the part of the memory to be updated and rewriting the updated certificate and authenticating the card (CM) and its content (M) by the terminal (T) before and after updating.

2. Process according to claim 1, characterized in that the balance (b) contained in the area (B) is a financial balance, the process then being a payment process corresponding to a service.

3. Process according to claim 2, characterized in that it consists of:
a) checking that the certificate (d) contained in the area (D) of the part (Tr) of the memory is indeed a given function (g) of the identity of the card (i), its balance (b), the content (c) of the storage area (C) serving as the counter, and the identity (j) of the final security module having performed the last transaction;
b) calculating, in the security module (MS), a new balance (b') differing from the old balance (b) by a certain number of units (n), corresponding to a service;
c) calculating, in the security module (MS), a content of the counter (c') equal to the old content (c) increased by one unit (c'=c+1);
d) calculating in a new certificate (d') equal to said function (g) of the identity of the card (i), the new balance (b'), the new content (c') of the counter and the identity (j') of the security module (MS);
e) incrementing by one unit the content (c) of the storage area (C) of the card serving as the counter (c'=c+1);
f) if and only if said content (c') has in fact been incremented is it possible to erase the part (Tr) of the memory of its old content (tr) constituted by the old balance (b), the old certificate (d) and the old identity (j) of the final security module used and write there in its place a new content (tr') constituted by the new balance (b'), the new certificate (d') and the identity (j') of the security module of the terminal;
g) authenticate by the security module (MS) the card (CM) and at least the identity (j) of the new content (tr') of the area (Tr);
h) in the case of authenticity, modify the balance (s) of the security module by the quantity (n) corresponding to the modification of the balance of the card (s'=s+n).

4. Process according to claim 3, characterized in that, in order to authenticate a card (CM) during its introduction into a terminal (T):
- the security module (MS) chooses and stores a random variable (x) and the address at the terminal (T),
- the terminal (T) addresses said random variable (x) to the card (CM),
- the card (CM) reads the content of its memory (m) and the address at the terminal (T),
- the security module (MS) calculates a function Y=f(x,m) of the random variable (x) and the content (m) of the memory (M),
- the card calculates a function Y=f(m,x) of its content (m) and the random variable (x) received and addresses this function (Y) to the terminal,
- the security module (MS) tests that the result of the function (Y) received from the card is indeed identical to the result of the function which it has calculated.

## Patentansprüche

1. Verfahren, um eine Information (tr), enthalten in einem Teil (Tr) eines Speichers (M), der in einer Speicherkarte (CM) enthalten ist, zu aktualisieren mit Hilfe eines Terminals (T), das mit einem Sicherheitsmodul (MS) ausgestattet ist, wobei der Speicher (M) eine Zählerzone (C) enthält, der Inhalt des Teils (Tr) des zu aktualisierenden Speichers (M) ein Zertikfakt (d) umfaßt, enthalten in einer Zone (D) dieses Teils (Tr), und dieses Zertifikat eine bestimmte Funktion (g) der Identität (i) der Karte, eines in einer anderen Zone (B) enthaltenen Saldos (b), des Inhalts (c) der Zählerzone (C) und der Identität (j) des Sicherheitsmoduls (MS) ist, der die letzte Aktualisierung durchgeführt hat, wobei dieses Verfahren folgende Schritten umfaßt:
- Inkrementieren des Inhalts (c) der Zählerzone (C) um eine Einheit vor jeder Aktualisierung des Teils (TR),
- Löschen des in der Zone (D) des zu aktualisierenden Teils des Speichers enthaltenen Zertifikats und Wiedereinschreiben des aktualisierten Zertifikats, wenn und nur wenn der Inhalt (c)der Zählerzone (C) inkrementiert worden ist,
- Authentifizieren der Karte (CM) und ihres Inhalts (m) durch das Terminal (T) vor und nach der Aktualisierung.

2. Verfahren nach Anspruch 1, dadurch gekennzeichnet, daß der Saldo (b), enthalten in der Zone (B), ein finanzieller Saldo ist, wobei das Verfahren dann ein einer Leistung entsprechendes Zahlungsverfahren ist.

3. Verfahren nach Anspruch 2, dadurch gekennzeichnet, daß es folgende Schritte umfaßt:
a) Überprüfen, ob das Zertifikat (d), enthalten in der Zone (D) des Teils (Tr) des Speichers eine bestimmte Funktion (g) der Identität (i) der Karte, ihres Saldos (b), des Inhalts (c) der die Rolle des Zählers spielenden Speicherzone (C) und die Identität (j) des letzten Sicherheitsmoduls ist, der die letzte Transaktion durchgeführt hat,
b) Berechnen, in dem Sicherheitsmodul (MS), eines neuen Saldos (b'), der sich von dem alten (b) um eine gewisse, einer Leistung entsprechende Anzahl Einheiten (n) unterscheidet,
c) Berechnen, in dem Sicherheitsmodul (MS), eines Zählerinhalts (c') gleich dem alten Inhalt (c) erhöht um eine Einheit (c'=c+1),
d) Berechnen eines neuen Zertifikats (d') gleich der genannten Funktion (g) der Identität (i) der Karte, des neuen Saldos (b'), des neuen Inhalts (c') des Zählers und der Identität (j') des Sicherheitsmoduls (MS),
e) Inkrementieren des Inhalts (c) der Speicherzone (C) der die Rolle des Zählers spielenden Karte um eine Einheit (c'=c+1),
f) Löschen, wenn und nur wenn dieser Inhalt (c') effektiv inkrementiert worden ist, aus dem Teil (Tr) des Speichers seinen alten Inhalt (tr), gebildet durch den alten Saldo (b), das alte Zertifikat (d) und die alte Identität (j) des letzten benutzten Sicherheitsmoduls und Einschreiben eines neuen Inhalts (tr'), gebildet durch den neuen Saldo (b'), das neue Zertifikat (d') und die Identität (j') des Sicherheitsmoduls des Terminals,
g) Authentifizieren, durch den Sicherheitsmodul (MS), der Karte (CM) und wenigstens der Identität (j') des neuen Inhalts (tr') des Teils (Tr),
h) Ändern, im Falle von Authentizität, des Saldos (s) des Sicherheitsmoduls um die der Änderung des Saldos der Karte entsprechende Größe (n) (s'=s+n).

4. Verfahren nach Anspruch 3, dadurch gekennzeichnet, daß zum Authentifizieren einer Karte (CM) bei ihrer Einführung in ein Terminal (T):
- der Sicherheitsmodul (MS) eine Zufallszahl (x) wählt und abspeichert und sie an das Terminal (T) adressiert,
- das Terminal (T) diese Zufallszahl (x) an die Karte (CM) adressiert,
- die Karte (CM) den Inhalt ihres Speichers (m) liest und ihn an das Terminal (T) adressiert,
- der Sicherheitsmodul (MS) eine Funktion Y=f(x,m) der Zufallszahl (x) und des Inhalts (m) des Speichers (M) berechnet,
- die Karte eine Funktion Y=f(m,x) ihres Inhalts (m) und der empfangenen Zufallszahl (x) berechnet und diese Funktion (Y) an das Terminal adressiert,
- der Sicherheitsmodul (MS) überprüft, ob das Resultat der von der Karte empfangenen Funktion (Y) tatsächlich identisch ist mit dem Resultat der Funktion, das er errechnet hat.
